# EUROPÄISCHE PATENTSCHRIFT

(11) **EP 3 124 926 B1**
(45) Veröffentlichungstag und Bekanntmachung des Hinweises auf die Patenterteilung: **07.03.2018**
(21) Anmeldenummer: 16174595.5
(22) Anmeldetag: 15.06.2016
(51) Int. Cl.: G01J 5/04, G01J 5/02, G01J 5/20, G01J 5/08

(54) **MIKROELEKTROMECHANISCHE VORRICHTUNG**
MICROELECTROMECHANICAL DEVICE
DISPOSITIF MICRO-ELECTROMECANIQUE

(30) Priorität: 29.07.2015 DE 102015214362
(43) Veröffentlichungstag der Anmeldung: 01.02.2017
(73) Patentinhaber: ROBERT BOSCH GMBH, 70442 Stuttgart (DE)
(72) Erfinder: Utermoehlen, Fabian, 71229 Leonberg (DE); Curcic, Michael, 70563 Stuttgart (DE)

(56) Entgegenhaltungen:
- WO-A1-2008/028512
- US-A- 2 954 477
- US-A- 3 742 235

## Beschreibung

Die vorliegende Erfindung betrifft eine mikroelektromechanische Vorrichtung, ein Herstellungsverfahren für eine mikroelektromechanische Vorrichtung, eine Verwendung einer mikroelektromechanischen Vorrichtung als Bolometer sowie eine Messvorrichtung zum Messen einer Temperaturverteilung.

### Stand der Technik

Mikroelektromechanische Bolometer können elektromagnetische Strahlungsintensitäten in einem bestimmten Wellenlängenbereich (etwa 3 bis 15 Mikrometer) messen. Das Bolometer umfasst dazu einen Absorber, welcher die elektromagnetische Strahlung in Wärme umwandelt. Die Temperaturerhöhung des Absorbers wird gemessen und auf die Intensität der elektromagnetischen Strahlung und die Objekttemperatur rückgeschlossen.

Beispielsweise ist aus der DE 11 2006 004 013 B4 ein Bolometer bekannt, bei welchem die Erwärmung des Absorbers mit Hilfe eines elektrischen Widerstands gemessen wird. Weiter offenbart die Druckschrift US 2954477 ein Verfahren zur Detektion von Infrarotstrahlung, bei dem Halbleitermaterial in einer Mikrowellenkavität eingesetzt wird.

### Offenbarung der Erfindung

Die vorliegende Erfindung schafft gemäß einem ersten Aspekt eine mikroelektromechanische Vorrichtung mit einem an einer Substratoberseite eines Substrats und/oder einem an einer Substratrückseite des Substrats angeordneten Magneten, einem im Substrat integrierten Mikrowellensender, einem im Substrat integrierten Mikrowellenempfänger und einem von dem Substrat beabstandeten Absorberniveau. Das Absorberniveau umfasst eine dem Substrat zugewandte paramagnetische Schicht und eine vom Substrat abgewandte Infrarot-Absorberschicht. Der Ausdruck "Niveau" bezeichnet hierbei eine Plattform, welche oberhalb eines Substrats und von diesem beabstandet angeordnet ist.

Die vorliegende Erfindung schafft gemäß einem zweiten Aspekt ein Herstellungsverfahren für eine mikroelektromechanische Vorrichtung. Dazu wird ein Substrat mit einem in dem Substrat integrierten Mikrowellensender und einem in dem Substrat integrierten Mikrowellenempfänger bereitgestellt. Anschließend wird ein Elektromagnet an einer Substratoberseite des Substrats ausgebildet und/oder ein Magnet an einer Substratrückseite des Substrats ausgebildet. Eine Opferschicht wird auf die Substratoberseite aufgebracht. Eine paramagnetische Schicht wird auf der Opferschicht aufgebracht und strukturiert. Eine Absorberschicht wird auf der paramagnetischen Schicht aufgebracht und strukturiert, wobei mindestens ein Haltearm freigestellt wird. Anschließend wird die Opferschicht entfernt.

Die vorliegende Erfindung schafft gemäß einem dritten Aspekt eine Verwendung einer mikroelektromechanischen Vorrichtung als Bolometer. Dazu wird Mikrowellenstrahlung durch den Mikrowellensender ausgesandt und die von dem Absorberniveau reflektierte Mikrowellenstrahlung durch den Mikrowellenempfänger empfangen. Ein Absorptionsspektrum des Absorberniveaus wird anhand der empfangenen Mikrowellenstrahlung bestimmt und eine Temperatur des Absorberniveaus anhand einer Absorptionsbreite des berechneten Absorptionsspektrums bestimmt.

Die vorliegende Erfindung schafft gemäß einem vierten Aspekt eine Messvorrichtung zum Messen einer Temperaturverteilung mit einer Vielzahl von in einem Array auf einem gemeinsamen Substrat angeordneten Bolometern. Hierbei weisen die mikroelektromechanischen Bolometer in jeder Reihe des Arrays einen gemeinsamen im Substrat integrierten Mikrowellensender auf. Desweiteren weisen die Bolometer in jeder Spalte des Arrays einen gemeinsamen im Substrat integrierten Mikrowellenempfänger auf.

Bevorzugte Weiterbildungen sind Gegenstand der jeweiligen Unteransprüche.

### Vorteile der Erfindung

Im Gegensatz zu einem Bolometer, bei welchem die Erwärmung des Absorbers mit Hilfe eines Widerstands gemessen wird, ist bei der erfindungsgemäßen mikroelektromechanischen Vorrichtung eine elektrische Kontaktierung des Absorberniveaus nicht nötig. Dadurch sind nur wenige Prozessschritte notwendig, da die Kontaktierung des Absorberniveaus sowie die Ausbildung des Widerstandes entfallen. Gleicher Vorteil gilt auch gegenüber anderen thermoelektrischen Wandlerelementen wie z.B. Dioden. Durch Einsatz einer erfindungsgemäßen Vorrichtung entfällt zudem ein Stromfluss mit entsprechendem Verlustleistungsumsatz innerhalb des thermoelektrischen Wandlerelementes, der zu einer Aufheizung des Bolometerpixels führt, welche zum Beispiel über zusätzliche Referenzpixel mit entsprechendem Platzbedarf kompensiert werden muss.

Da keine elektrische Verbindung zwischen Absorberniveau und Substrat nötig ist, wird die thermische Kopplung von Absorberniveau und Substrat minimiert. Dadurch kommt es zu einer stärkeren Erwärmung des Absorbers und einem größeren Messsignal.

Aufgrund der geringen thermischen Masse des Absorberniveaus ist eine sehr schnelle Ermittlung der Temperatur des Absorberniveaus möglich. Das Bestimmen der Temperatur des Absorberniveaus kann dadurch schnell und mit einer hohen Genauigkeit durchgeführt werden. Dadurch sind beim Einsatz in bildgebenden Systemen hohe Frameraten (Bildwiederholraten) möglich.

Gemäß einem weiteren Aspekt schafft die vorliegende Erfindung eine mikroelektromechanische Vorrichtung, wobei die paramagnetische Schicht Manganate, insbesondere La_{0,62}Bi_{0,05}Ca_{0,33}MnO₃, und/oder La_{0,67}Sr_{0,33}MnO₃ umfasst. Für die genannten Manganate ist der Zusammenhang zwischen Breite des Absorptionsspektrums und Temperatur des Absorberniveaus gut untersucht. Daher kann durch Bestimmen des Absorptionsspektrums die Temperatur des Absorberniveaus und dadurch die Intensität der einfallenden elektromagnetischen Strahlung mit großer Präzision bestimmt werden. Wie unten erläutert, wächst die Absorptionsbreite des Absorptionsspektrums linear mit der Temperatur an. Dadurch kann die Temperatur genauer und mit weniger Elektronikaufwand und Rechenleistung gemessen werden als dies beispielsweise bei einem nicht-linearen Zusammenhang der Fall wäre.

Gemäß einem weiteren Aspekt schafft die vorliegende Erfindung eine mikroelektromechanische Vorrichtung, wobei die Infrarot-Absorberschicht Siliziumoxid umfasst.

Gemäß einem weiteren Aspekt schafft die vorliegende Erfindung eine mikroelektromechanische Vorrichtung, wobei in die Infrarot-Absorberschicht Metallelemente als plasmonische Absorber, insbesondere Metallspiegel, metallische Scheiben, metallische Kreuze, metallische Gitter und/oder Antennenstrukturen aus Metall integriert sind. Durch Verwendung von in der Infrarotabsorberschicht integrierten Metallelementen kann die Infrarotabsorptionsfähigkeit der Infrarot-Absorberschicht erhöht werden. Dadurch wird eine effiziente und gleichmäßige Erwärmung des Absorberniveaus sichergestellt.

Gemäß einem weiteren Aspekt schafft die vorliegende Erfindung eine mikroelektromechanische Vorrichtung, wobei eine Schichtdicke der Absorberschicht kleiner oder gleich 1,6 Mikrometer ist.

Gemäß einem weiteren Aspekt schafft die vorliegende Erfindung eine mikroelektromechanische Vorrichtung, wobei als Mikrowellensender Gunndioden und/oder Wellenleiter verwendet werden.

Gemäß einem weiteren Aspekt schafft die vorliegende Erfindung eine mikroelektromechanische Vorrichtung, wobei an der Substratoberseite ein Elektromagnet und an der Substratrückseite ein Permanentmagnet angeordnet ist. Durch Verwendung eines Elektromagneten kann die Stärke des angelegten Magnetfelds gesteuert werden. Durch Erhöhen des angelegten Magnetfelds wird die Messgenauigkeit des verwendeten Bolometers erhöht.

### Vorteile der Erfindung

### Kurze Beschreibung der Zeichnungen

Es zeigen:
- FIG. 1: eine schematische Schrägansicht einer Ausführungsform einer mikroelektromechanischen Vorrichtung;
- FIG. 2: eine schematische Querschnittsansicht der mikroelektromechanischen Vorrichtung gemäß der Ausführungsform;
- FIG. 3: ein Flussdiagramm zur Erläuterung einer Ausführungsform eines Herstellungsverfahrens einer mikroelektromechanischen Vorrichtung;

- FIG. 4 bis 8: schematische Querschnittsansichten zur Erläuterung der Ausführungsform des Herstellungsverfahrens der mikroelektromechanischen Vorrichtung;
- FIG. 9: ein Flussdiagramm zur Erläuterung einer erfindungsgemäßen Verwendung der mikroelektromechanischen Vorrichtung als Bolometer;
- FIG. 10: ein schematisches Absorptionsspektrum;
- FIG. 11: ein Diagramm zur Erläuterung der Beziehung von Temperatur und Absorptionsbreite; und
- FIG. 12: eine schematische Draufsicht einer Vorrichtung zum Messen einer Temperaturverteilung.

In allen Figuren sind gleiche bzw. funktionsgleiche Elemente und Vorrichtungen - sofern nichts anderes angegeben ist - mit denselben Bezugszeichen versehen.

### Beschreibung der Ausführungsbeispiele

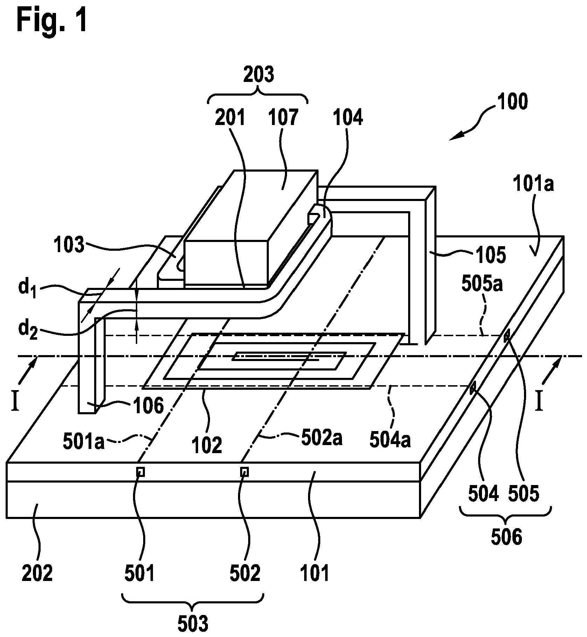

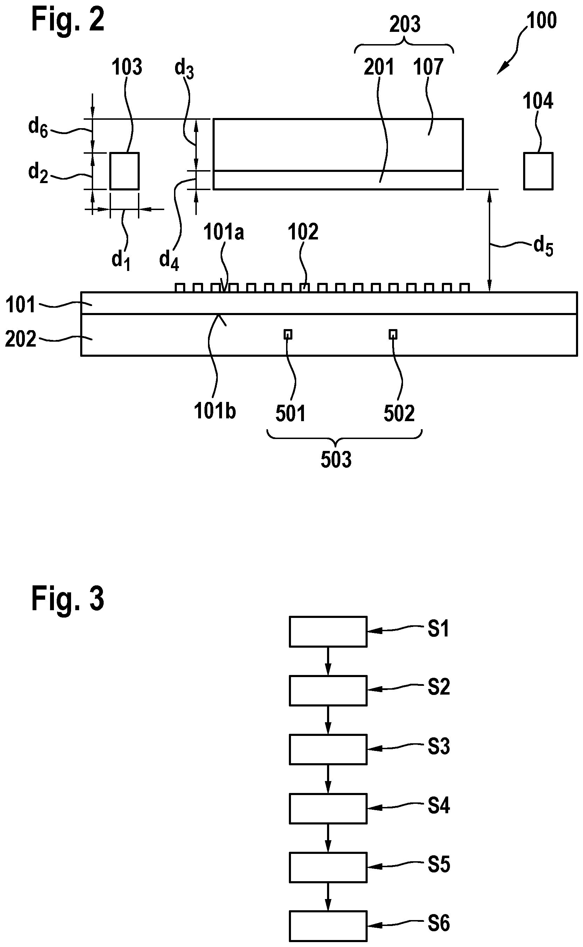

Figur 1 zeigt eine schematische Schrägansicht einer Ausführungsform einer mikroelektromechanischen Vorrichtung 100 gemäß der vorliegenden Erfindung und Figur 2 zeigt eine schematische Querschnittsansicht der mikroelektromechanischen Vorrichtung 100 entlang der Achse I-I. Auf einer Substratrückseite 101b eines Substrats 101, welches beispielsweise aus einem Siliziumwafer gefertigt sein kann, ist eine Permanentmagnetschicht 202 ausgebildet. Auf einer Substratoberseite 101a des Substrats 101 ist eine Spule 102 angeordnet, welche vorzugsweise aus Kupfer besteht. Die Spule 102 dient als Elektromagnet, wobei durch Anlegen eines elektrischen Stroms ein magnetisches Feld induziert wird. Die gesamte Magnetfeldstärke des durch die Permanentmagnetschicht 202 und die Spule 102 erzeugten Magnetfeldes wird hierbei möglichst groß gewählt, vorzugsweise 1 bis 2 Tesla.

Die Erfindung ist nicht hierauf beschränkt. So kann beispielsweise nur eine Permanentmagnetschicht 202 auf der Substratrückseite 101b aufgebracht sein und die Spule 102 fehlen oder es kann nur eine Spule 102 auf der Substratoberseite 101a angeordnet sein, die Permanentmagnetschicht 202 jedoch fehlen.

In einem Absorberniveauabstand d₅ befindet sich ein Absorberniveau 203. Der Absorberniveauabstand d₅ wird hierbei in etwa gleich einem Viertel der zu detektierenden Wellenlänge λ gewählt, das heißt d₅ = λ : 4. Vorzugsweise liegt der AbsorberniveauAbstand d₅ im Bereich von 1 bis 5 Mikrometer, insbesondere d₅ = 2,5 Mikrometer. Das Absorberniveau 203 weist eine paramagnetische Schicht 201, welche dem Substrat 101 zugewandt ist und eine dem Substrat abgewandte Infrarot-Absorberschicht 107 auf. Das Material der paramagnetischen Schicht 201 umfasst vorzugsweise Manganate, insbesondere La_{0,62}Bi_{0,05}Ca_{0,33}MnO₃ und/oder La_{0,67}Sr_{0,33}MnO₃. Die Schichtdicke d₄ der paramagnetischen Schicht 201 liegt zwischen 50 und 800 Nanometer, vorzugsweise ist die Schichtdicke d₄ der paramagnetischen Schicht 201 gleich 300 Nanometer. Die Infrarot-Absorberschicht 107 weist eine Schichtdicke d₃ von weniger als 3 Mikrometer, vorzugsweise von kleiner oder gleich 1,6 Mikrometer auf.

Vorzugsweise sind in der Infrarot-Absorberschicht 107 Metallelemente als plasmonische Absorber integriert. Die Metallelemente können insbesondere Metallspiegel, metallische Scheiben, metallische Kreuze, metallische Gitter und/oder Antennenstrukturen aus Metall umfassen.

Das Absorberniveau 203 wird durch ein erstes Halteärmchen 104, welches über eine erste Säule 106 mit dem Substrat verbunden ist und ein zweites Halteärmchen 103, welches über eine zweite Säule 105 mit dem Substrat 101 verbunden ist, über dem Substrat schwebend fixiert. Das erste Halteärmchen 104 und das zweite Halteärmchen 103 bestehen hierbei vorzugsweise aus Siliziumoxid und weisen jeweils eine Breite d₁ von 100 Nanometer bis 1000 Nanometer, vorzugsweise gleich 500 Nanometer und eine senkrecht zum Substrat 101 gemessene Dicke d₂ von etwa 100 Nanometer bis 1000 Nanometer, vorzugsweise gleich 400 Nanometer auf.

Die Erfindung ist jedoch nicht hierauf beschränkt. So können die Halteärmchen 103, 104 auch auf einer (nicht gezeigten) Schicht enden, welche auf dem Substrat 101 um die mikroelektromechanische Vorrichtung 100 herum ausgebildet ist und bis zur Höhe der Halteärmchen 103, 104 hinaufreicht.

In dem Substrat 101 ist ein Mikrowellensender 503 integriert, welcher aus einem Hohlleiter besteht, wobei der Hohlleiter ein erstes Mikrowellensender-Teilstück 501 und ein zweites Mikrowellensender-Teilstück 502 umfasst, welche entlang der gestrichelt angezeichneten Achsen 501a bzw. 502a unterhalb des Absorberniveaus 203 verlaufen.

Des Weiteren ist in dem Substrat 101 ein Mikrowellenempfänger 506 integriert, welcher aus einem Hohlleiter besteht, wobei der Hohlleiter ein erstes Mikrowellenempfänger-Teilstück 504 und ein zweites Mikrowellenempfänger-Teilstück 505 umfasst, welche entlang der gestrichelt eingezeichneten Linien 504a bzw. 505a unterhalb des Absorberniveaus verlaufen. Die Mikrowellensender-Teilstücke 501, 502 und die Mikrowellenempfänger-Teilstücke 504, 505 stehen hierbei im Wesentlichen senkrecht aufeinander.

Die Erfindung ist nicht hierauf beschränkt. So können auch Gunndioden anstatt von Hohlleitern als Mikrowellensender und/oder Empfänger verwendet werden.

Figur 3 zeigt ein Flussdiagramm zur Erläuterung einer Ausführungsform eines Herstellungsverfahrens einer mikroelektromechanischen Vorrichtung 100 gemäß der vorliegenden Erfindung.

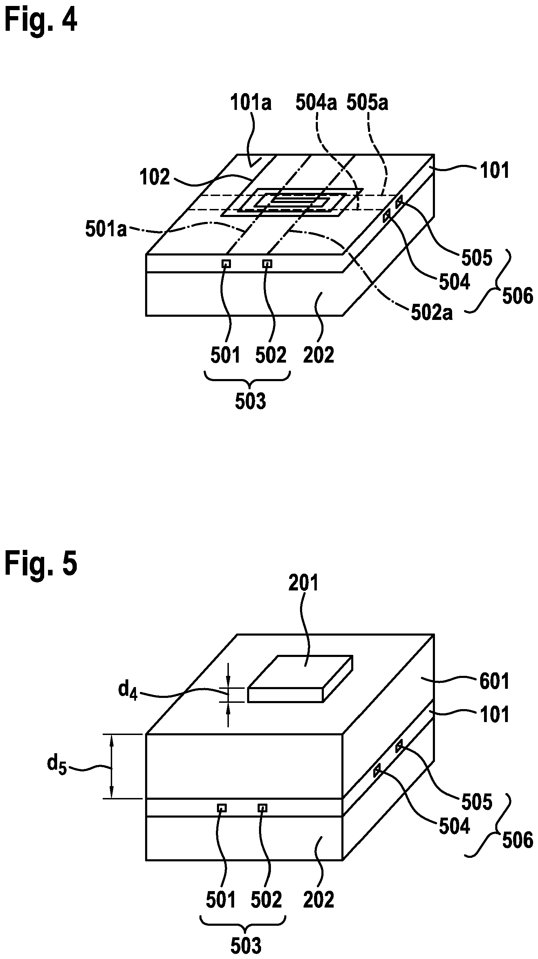

Wie in Figur 4 gezeigt, wird in einem ersten Schritt S1 ein Substrat 101, welches vorzugsweise aus einem Siliziumwafer gefertigt ist, bereitgestellt. In dem Substrat 101 sind ein Mikrowellensender 503 und ein Mikrowellenempfänger 506 integriert, welche ein erstes Mikrowellensender-Teilstück 501 und ein zweites Mikrowellensender-Teilstück 502 bzw. ein erstes Mikrowellenempfänger-Teilstück 504 und ein zweites Mikrowellenempfänger-Teilstück 505 umfassen, welche im Wesentlichen senkrecht aufeinander stehen.

In einem zweiten Schritt S2 wird eine Permanentmagnetschicht 202 auf einer Substratrückseite 101b des Substrats 101 beispielsweise in Dünnschichttechnik ausgebildet. Auf einer Substratoberseite 101a des Substrats 101 wird eine Spule 102 angeordnet, welche mit einem nicht gezeigten Steuergerät verbunden ist und zum Erzeugen eines Magnetfeldes ausgebildet ist.

Wie in Figur 5 gezeigt, wird in einem dritten Schritt S3 eine Opferschicht 601 auf der Substratoberfläche 101a des Substrats 101 aufgebracht. Die Schichtdicke der Opferschicht entspricht dem späteren Absorberniveauabstand d₅ und liegt zwischen 1 und 5 Mikrometer und ist vorzugsweise gleich 2,5 Mikrometer.

In einem vierten Schritt S4 wird eine paramagnetische Schicht 201 auf der Opferschicht aufgebracht. Die Schichtdicke d₄ der paramagnetischen Schicht 201 liegt zwischen 50 Nanometer und 800 Nanometer und ist vorzugsweise gleich 300 Nanometer. Die paramagnetische Schicht 201 wird beispielsweise durch Ätzen oder mit Hilfe eines Lasers derart strukturiert, dass ein Quader mit einer quadratischen Oberfläche entsteht, welcher eine Abmessung zwischen etwa 5 Mikrometer x 5 Mikrometer bis 100 Mikrometer x 100 Mikrometer aufweist. Die paramagnetische Schicht 201 umfasst vorzugsweise Manganate, insbesondere La_{0,62}Bi_{0,05}Ca_{0,33}MnO₃, und/oderLa_{0,67}Sr_{0,33}MnO₃.

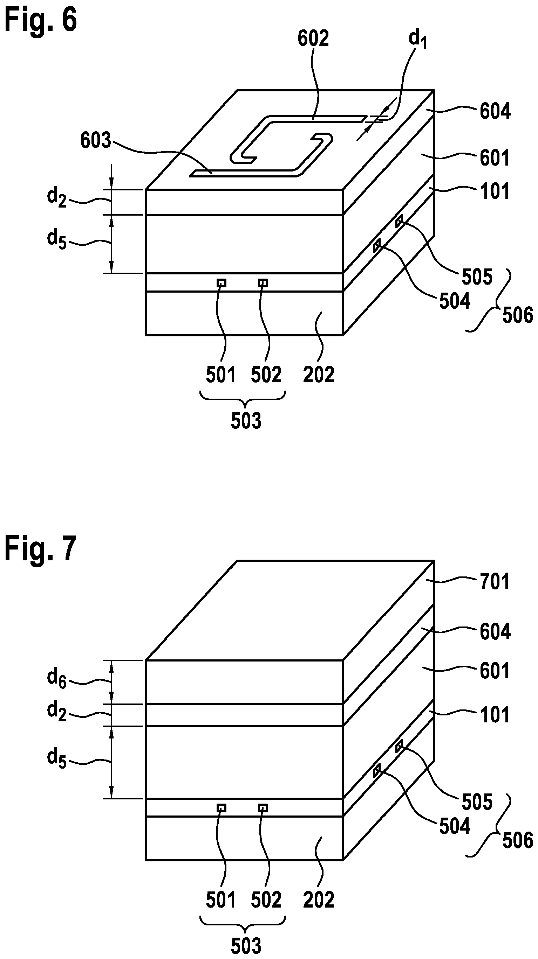

In einem fünften Schritt S5 wird eine Absorberschicht 107 auf der paramagnetischen Schicht 201 ausgebildet. Hierzu wird zuerst, wie in Figur 6 gezeigt, eine erste Oxidschicht 604, vorzugsweise aus Siliziumoxid, auf der Opferschicht 601 und der paramagnetischen Schicht 201 ausgebildet. Die Dicke d₂ der ersten Oxidschicht 604 ist hierbei größer als die Schichtdicke d₄ der paramagnetischen Schicht 201 und liegt beispielsweise zwischen 100 und 1000 Nanometer und liegt vorzugsweise bei 400 Nanometer. Auf der ersten Oxidschicht 604 werden eine erste Metallstruktur 602 und eine zweite Metallstruktur 603 mit einer Breite d₁ zwischen 100 bis 1000 Nanometer, vorzugsweise gleich 500 Nanometer, abgeschieden. Diese Metallstrukturen sind ätzresistent und entsprechen in ihrer Form einem später zu bildenden ersten Halteärmchen 104 und zweiten Halteärmchen 103.

Auf der ersten Oxidschicht 604 wird eine in Figur 7 gezeigte zweite Oxidschicht 701 aufgebracht. Eine Schichtdicke d₆ der zweiten Oxidschicht 701 plus die Dicke d₂ der ersten Oxidschicht 604 entspricht hierbei der Schichtdicke d₄ der paramagnetischen Schicht 201 plus einer Schichtdicke d₃ einer InfrarotAbsorberschicht 107, wie auch in Figur 2 veranschaulicht.

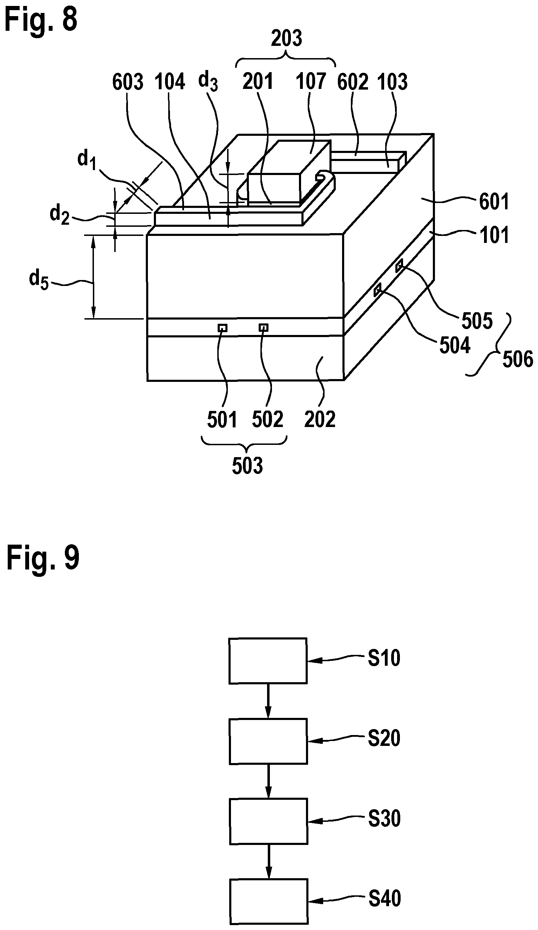

Diese Infrarot-Absorberschicht 107 wird durch Ätzen der zweiten Oxidschicht 701 und der ersten Oxidschicht 604, wie in Figur 8 gezeigt, freigestellt. Durch den Ätzprozess werden darüber hinaus ein erstes Halteärmchen 104 und ein zweites Halteärmchen 103, deren Form durch die erste Metallstruktur 602 bzw. durch die zweite Metallstruktur 603 festgelegt ist, strukturiert. Anschließend werden die erste Metallstruktur 602 und die zweite Metallstruktur 603 entfernt.

Schließlich wird in einem sechsten Schritt S6 durch Trenchätzen der Opferschicht 601 ein Absorberniveau 203, welches die paramagnetische Schicht 201 und die Infrarot-Absorberschicht 107 umfasst, freigestellt, wodurch eine in Figur 1 gezeigte mikromechanische Struktur 100 gebildet wird.

Die Erfindung ist nicht auf die genannte Ausführungsform beschränkt. Beispielsweise kann das Ausbilden der Permanentmagnetschicht 202 auf der Substratunterseite 101b erst am Ende des Herstellungsverfahrens durchgeführt werden. Des Weiteren kann auch nur entweder eine Permanentmagnetschicht 202 oder eine Spule 102 ausgebildet werden. Außerdem kann die mikroelektromechanische Vorrichtung 100 durch ein Niedertemperaturbondverfahren vakuumverkappt werden.

Figur 9 zeigt ein Flussdiagramm zur Erläuterung einer erfindungsgemäßen Verwendung der mikroelektromechanischen Vorrichtung 100 als Bolometer. In einem ersten Schritt S10 sendet der Mikrowellensender 503 Mikrowellenstrahlung aus, welche von der paramagnetischen Schicht 201 absorbiert wird.

In einem zweiten Schritt S20 wird die Mikrowellenstrahlung, welche von dem Absorberniveau reflektiert wurde, von dem Mikrowellenempfänger 506 empfangen und in einem dritten Schritt S30 das Absorptionsspektrum anhand der empfangenen Mikrowellenstrahlung bestimmt, beispielsweise durch eine nicht gezeigte Auswerteeinheit. Die Bestimmung des Absorptionsspektrums kann durch Reflexions- bzw. Transmissionsmethoden durchgeführt werden. Hierbei wird das Mikrowellensignal von dem Mikrowellensender 503 derart ausgesandt, dass der Magnetfeldanteil des Mikrowellensignals im Wesentlichen senkrecht zu den Feldlinien des durch Spule 102 und Permanentmagnetschicht 202 erzeugten Magnetfelds steht.

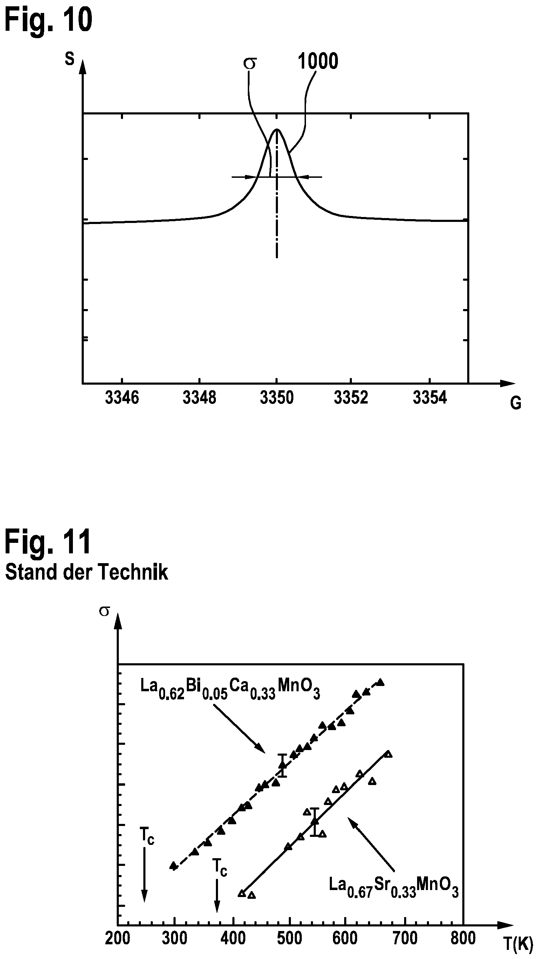

Figur 10 zeigt ein typisches Absorptionsspektrum 1000 für eine ausgesendete Mikrowellenstrahlung mit einer Frequenz von 9388,2 MHz für eine feste Temperatur der paramagnetischen Schicht 201. Die Signalstärke S des Mikrowellenspektrums 1000 wird als Funktion der magnetischen Feldstärke G, welche von der Spule 102 und der Permanentmagnetschicht 202 erzeugt wird, aufgetragen. Das Absorptionsspektrum 1000 weist eine Absorptionsbreite 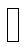 auf. Wie in Figur 11 gezeigt, weist die Absorptionsbreite 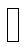 eine weitestgehend lineare Abhängigkeit von der Temperatur der paramagnetischen Schicht 201 auf. Die genaue Form der Abhängigkeit hängt dabei von dem verwendeten Material der paramagnetischen Schicht 201 ab. In Figur 11 sind zwei verschiedene Materialien aufgezeichnet, nämlich La_{0,67}Sr_{0,33}MnO₃ und La_{0,62}Bi_{0,05}Ca_{0,33}MnO₃.

Die in Figur 11 gezeigte Abbildung stammt aus folgender Veröffentlichung: Seehra, M.S., et al., "The linear temperature dependence of the paramagnetic resonance linewidth in the manganate perovskites La0,67Sr0,33MnO3 and La0,62B10,05Ca0,33MnO3," Journal of Physics: Condensed Matter Vol. 8, No. 50 (1996), Seite 11283.

Anhand des Absorptionsspektrums kann die Absorptionsbreite 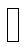 bestimmt werden. Anhand des aus Figur 11 bekannten linearen Zusammenhangs zwischen Absorptionsbreite 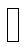 und Temperatur T kann bei bekanntem Material der paramagnetischen Schicht 201 die Temperatur T der paramagnetischen Schicht 201 und damit des Absorberniveaus 203 in einem vierten Schritt S40 bestimmt werden. Von der Temperatur T des Absorberniveaus kann auf die Intensität der eingestrahlten elektromagnetischen Strahlung rückgeschlossen werden.

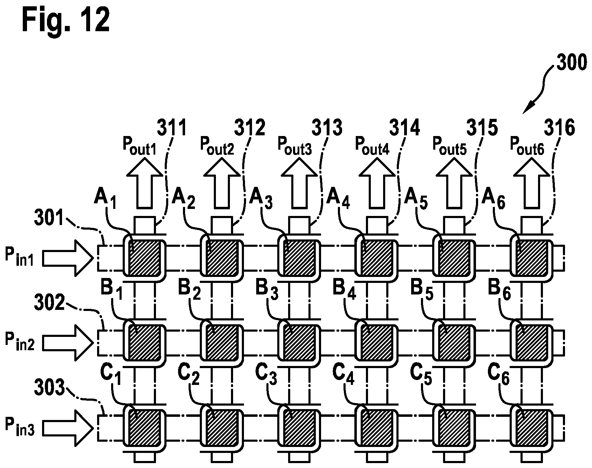

Figur 12 zeigt eine Messvorrichtung 300 zum Messen einer Temperaturverteilung. Die Messvorrichtung 300 umfasst eine Vielzahl von erfindungsgemäßen Bolometern A₁ bis A₆, B₁ bis B₆ und C₁ bis C₆. Die Bolometer können hierbei eine der voran beschriebenen Ausführungsformen sein. Die Bolometer sind in der dargestellten Ausführungsform in einem Array mit drei Zeilen und sechs Spalten angeordnet. Die Anzahl der Bolometer ist nicht hierauf beschränkt und kann insbesondere deutlich höher sein. Unterhalb der sechs Bolometer A₁ bis A₆ der obersten Zeile verläuft im Substrat ein erster Mikrowellensender 301, welcher wie oben beschrieben als Hohlleiter zum Aussenden von Mikrowellenstrahlung für das jeweilige Bolometer ausgebildet ist. Parallel dazu verläuft unter den sechs Bolometern B₁ bis B₆ der zweiten Zeile im Substrat ein zweiter Mikrowellensender 302 und unter den sechs Bolometer C₁ bis C₆ im Substrat ein dritter Mikrowellensender 303. Senkrecht zu den Mikrowellensendern 301 bis 303 verlaufen unter den Bolometern der ersten bis sechsten Spalte des Arrays jeweils ein erster bis sechster Mikrowellenempfänger 311 bis 316.

Die Mikrowellensender 301 bis 303 senden nun nacheinander Mikrowellensignale aus. Zuerst sendet der erste Mikrowellensender 301 ein Signal Pᵢₙ₁ aus, welches von einer linken Seite, das heißt vom Bolometer A₁ zum Bolometer A₆ hin ausgesendet wird. Die Mikrowellenempfänger 311 bis 316 empfangen nun gleichzeitig das von den Absorberniveaus der Bolometer reflektierte Mikrowellensignal Pₒᵤₜ₁ bis Pₒᵤₜ₆. Der erste Mikrowellenempfänger 311 misst hierbei das Absorptionsspektrum des Bolometers A₁, der zweite Mikrowellenempfänger 312 misst das Absorptionsspektrum des Bolometers A₁ und des Bolometers A₂, usw., während der sechste Mikrowellenempfänger 316 das gesamte Absorptionsspektrum der Bolometer A₁ bis einschließlich A₆ misst. Durch Subtraktion von gemessenen Absorptionsspektren kann das Absorptionsspektrum des jeweiligen Bolometers gemessen werden. Beispielsweise wird das Absorptionsspektrum des fünften Bolometers A₅ durch Subtraktion des mittels des vierten Mikrowellenempfängers 314 empfangenen Absorptionsspektrums von dem mittels des fünften Mikrowellenempfängers 315 gemessenen Absorptionsspektrum gemessen werden. Von dem so berechneten Absorptionsspektrum kann die Temperatur des entsprechenden Bolometers berechnet werden.

Analog können die Temperaturen der Bolometer der zweiten und dritten Reihe des Arrays gemessen werden, wobei der zweite Mikrowellensender 302 bzw. dritte Mikrowellensender 303 ein Signal Pᵢₙ₂ bzw. ein Signal Pᵢₙ₃ aussendet.

Anhand der gemessenen Temperaturen der einzelnen Bolometer kann dadurch eine Temperaturverteilung gemessen werden.

## Patentansprüche

1. Mikroelektromechanische Vorrichtung (100) mit:
einem an einer Substratoberseite (101a) eines Substrats (101) und/oder einem an einer Substratrückseite (101b) des Substrats (101) angeordneten Magneten (102, 202);
einem im Substrat (101) integrierten Mikrowellensender (503);
einem im Substrat (101) integrierten Mikrowellenempfänger (506); und
einem von dem Substrat beabstandeten Absorberniveau (203) mit einer dem Substrat (101) zugewandten paramagnetischen Schicht (201) und einer vom Substrat (101) abgewandten Infrarot-Absorberschicht (107).

2. Mikroelektromechanische Vorrichtung (100) nach Anspruch 1, wobei die paramagnetische Schicht (201) Manganate, insbesondere La_{0,62}Bi_{0,05}Ca_{0,33}MnO₃ und/oder La_{0,67}Sr_{0,33}MnO₃ umfasst.

3. Mikroelektromechanische Vorrichtung (100) nach einem der Ansprüche 1 oder 2, wobei die Infrarot-Absorberschicht (107) Siliziumoxid umfasst.

4. Mikroelektromechanische Vorrichtung (100) nach einem der vorangehenden Ansprüche, wobei in die Infrarot-Absorberschicht (107) Metallelemente als plasmonische Absorber, insbesondere Metallspiegel, metallische Scheiben, metallische Kreuze, metallische Gitter und/oder Antennenstrukturen aus Metall integriert sind.

5. Mikroelektromechanische Vorrichtung (100) nach einem der vorangehenden Ansprüche, wobei eine Schichtdicke der Absorberschicht (107) kleiner oder gleich 1,6 Mikrometer ist.

6. Mikroelektromechanische Vorrichtung (100) nach einem der vorangehenden Ansprüche, wobei als Mikrowellensender (503) Gunndioden und/oder Wellenleiter verwendet werden.

7. Mikroelektromechanische Vorrichtung (100) nach einem der vorangehenden Ansprüche, wobei an der Substratoberseite (101a) ein Elektromagnet (102) und an der Substratrückseite (101b) ein Permanentmagnet (202) angeordnet ist.

8. Herstellungsverfahren für eine mikroelektromechanischen Vorrichtung (100) mit den Schritten:
Bereitstellen (S1) eines Substrats (101) mit einem in dem Substrat (101) integrierten Mikrowellensender (503) und einem in dem Substrat (101) integrierten Mikrowellenempfänger (506);
Ausbilden (S2) eines Elektromagneten (102) an einer Substratoberseite (101a) des Substrats (101) und/oder Ausbilden eines Magneten (202) an einer Substratrückseite (101b) des Substrats (101);
Aufbringen (S3) einer Opferschicht (601) auf die Substratoberseite (101a);
Aufbringen und Strukturieren (S4) einer paramagnetischen Schicht (201) auf der Opferschicht (601);
Aufbringen und Strukturieren (S5) einer Absorberschicht (107) auf der paramagnetischen Schicht (201), wobei mindestens ein Haltearm freigestellt wird; und
Entfernen (S6) der Opferschicht (601).

9. Verwendung einer mikroelektromechanischen Vorrichtung (100) nach einem der Ansprüche 1 bis 7 als Bolometer, mit den Schritten:
Aussenden (S10) von Mikrowellenstrahlung durch den Mikrowellensender (503);
Empfangen (S20) der von dem Absorberniveau (203) reflektierten Mikrowellenstrahlung durch den Mikrowellenempfänger (506);
Bestimmen (S30) eines Absorptionsspektrums des Absorberniveaus (203) anhand der empfangenen Mikrowellenstrahlung;
Bestimmen (S40) einer Temperatur des Absorberniveaus (203) anhand einer Absorptionsbreite (σ) des berechneten Absorptionsspektrums.

10. Messvorrichtung (300) zum Messen einer Temperaturverteilung mit
einer Vielzahl von in einem Array auf einem gemeinsamen Substrat (101) angeordneten Bolometern (A₁ bis A₆, B₁ bis B₆, C₁ bis C₆) nach Anspruch 9;
wobei die mikroelektromechanischen Bolometer in jeder Reihe des Arrays einen gemeinsamen im Substrat (101) integrierten Mikrowellensender (301 bis 303) aufweisen; und
wobei die Bolometer in jeder Spalte des Arrays einen gemeinsamen im Substrat (101) integrierten Mikrowellenempfänger (311 bis 316) aufweisen.

## Claims

1. Microelectromechanical device (100) having:
a magnet (102, 202) arranged on a substrate top side (101a) of a substrate (101) and/or a magnet (102, 202) arranged on a substrate rear side (101b) of the substrate (101);
a microwave emitter (503) integrated in the substrate (101);
a microwave receiver (506) integrated in the substrate (101); and
an absorber level (203), spaced apart from the substrate and having a paramagnetic layer (201) facing towards the substrate (101) and an infrared absorber layer (107) facing away from the substrate (101).

2. Microelectromechanical device (100) according to Claim 1, wherein the paramagnetic layer (201) comprises manganates, in particular La_{0.62}Bi_{0.05}Ca_{0.33}MnO₃ and/or La_{0.67}Sr_{0.33}MnO₃.

3. Microelectromechanical device (100) according to either of Claims 1 and 2, wherein the infrared absorber layer (107) comprises silicon oxide.

4. Microelectromechanical device (100) according to one of the preceding claims, wherein metal elements are integrated in the infrared absorber layer (107) as plasmonic absorbers, in particular metal mirrors, metallic discs, metallic crosses, metallic gratings and/or antenna structures made of metal.

5. Microelectromechanical device (100) according to one of the preceding claims, wherein a layer thickness of the absorber layer (107) is less than or equal to 1.6 micrometres.

6. Microelectromechanical device (100) according to one of the preceding claims, wherein Gunn diodes and/or waveguides are used as the microwave emitter (503).

7. Microelectromechanical device (100) according to one of the preceding claims, wherein an electromagnet (102) is arranged on the substrate top side (101a) and a permanent magnet (202) is arranged on the substrate rear side (101b).

8. Method for producing a microelectromechanical device (100), comprising the steps of:
providing (S1) a substrate (101) having a microwave emitter (503) integrated in the substrate (101) and a microwave receiver (506) integrated in the substrate (101);
forming (S2) an electromagnet (102) on a substrate top side (101a) of the substrate (101) and/or forming a magnet (202) on a substrate rear side (101b) of the substrate (101);
applying (S3) a sacrificial layer (601) to the substrate top side (101a);
applying and structuring (S4) a paramagnetic layer (201) on the sacrificial layer (601);
applying and structuring (S5) an absorber layer (107) on the paramagnetic layer (201), wherein at least one retaining arm is made available; and
removing (S6) the sacrificial layer (601).

9. Use of a microelectromechanical device (100) according to one of Claims 1 to 7 as a bolometer, comprising the steps of:
emission (S10) of microwave radiation by the microwave emitter (503);
reception (S20) of the microwave radiation reflected by the absorber level (203) by the microwave receiver (506);
determination (S30) of an absorption spectrum of the absorber level (203) on the basis of the microwave radiation received;
determination (S40) of a temperature of the absorber level (203) on the basis of an absorption width (σ) of the calculated absorption spectrum.

10. Measuring device (300) for measuring a temperature distribution, having
a multiplicity of bolometers (A₁ to A₆, B₁ to B₆, C₁ to C₆) according to Claim 9 which are arranged in an array on a common substrate (101);
wherein the microelectromechanical bolometers have, in each row of the array, a common microwave emitter (301 to 303) integrated in the substrate (101); and
wherein the bolometers have, in each column of the array, a common microwave receiver (311 to 316) integrated in the substrate (101).

## Revendications

1. Dispositif microélectromécanique (100) comprenant : un aimant (102, 202) disposé sur une face supérieure de substrat (101a) d'un substrat (101) et/ou sur une face arrière de substrat (101b) du substrat (101) ;
un émetteur à micro-ondes (503) intégré dans le substrat (101) ; un récepteur à micro-ondes (506) intégré dans le substrat (101) ; et
et un niveau d'absorbeur (203) espacé du substrat, ayant une couche paramagnétique (201) faisant face au substrat (101) et une couche absorbant l'infrarouge (107) tournée en sens opposé au substrat (101).

2. Dispositif microélectromécanique (100) selon la revendication 1, dans lequel la couche paramagnétique (201) comprend un manganate, en particulier du La_{0,62}Bi_{0,05}Ca_{0,33}MnO₃ et/ou du La_{0,67}Sr_{0,33}MnO₃.

3. Dispositif microélectromécanique (100) selon l'une des revendications 1 ou 2, dans lequel la couche absorbant l'infrarouge (107) comprend de l'oxyde de silicium.

4. Dispositif microélectromécanique (100) selon l'une des revendications précédentes, dans lequel des éléments métalliques sont intégrés dans la couche absorbant l'infrarouge (107) sous la forme d'absorbeurs plasmoniques, en particulier de miroirs métalliques, de disques métalliques, de croix métalliques, de grilles métalliques et/ou de structures d'antennes constituées de métal.

5. Dispositif microélectromécanique (100) selon l'une des revendications précédentes, dans lequel une épaisseur de couche de la couche absorbante (107) est inférieure ou égale à 1,6 micromètres.

6. Dispositif microélectromécanique (100) selon l'une des revendications précédentes, dans lequel des diodes Gunn et/ou des guides d'ondes sont utilisés en tant qu'émetteurs à micro-ondes (503).

7. Dispositif microélectromécanique (100) selon l'une des revendications précédentes, dans lequel un électroaimant (102) est disposé sur la face supérieure de substrat (101a) et dans lequel un aimant permanent (202) est disposé sur la face arrière de substrat (101b).

8. Procédé de fabrication d'un dispositif microélectromécanique (100) comprenant les étapes comprenant :
la fourniture (S1) d'un substrat (101) comportant un émetteur à micro-ondes (503) intégré dans le substrat (101) et un récepteur à micro-ondes (506) intégré dans le substrat (101) ;
la formation (S2) d'un électroaimant (102) sur la face supérieure de substrat (101a) du substrat (101) et/ou la formation d'un aimant (202) sur la face arrière de substrat (101b) du substrat (101) ;
l'application (S3) d'une couche sacrificielle (601) sur la face supérieure de substrat (101a) ;
l'application et la structuration (S4) d'une couche paramagnétique (201) sur la couche sacrificielle (601) ;
l'application et la structuration (S5) d'une couche absorbante (107) sur la couche paramagnétique (201), dans lequel un bras de support est optionnel ;
et l'enlèvement (S6) de la couche sacrificielle (601).

9. Utilisation d'un dispositif microélectromécanique (100) selon l'une des revendications 1 à 7 en tant que bolomètre, comprenant les étapes comprenant :
l'émission (S10) d'un rayonnement micro-onde par l'émetteur à micro-ondes (503) ;
la réception (S20) du rayonnement micro-onde réfléchi par le niveau d'absorbeur (203) par le récepteur à micro-ondes (506) ;
la détermination (S30) d'un spectre d'absorption du niveau d'absorbeur (203) en fonction du rayonnement micro-onde reçu ;
la détermination (S40) d'une température du niveau d'absorbeur (203) sur la base d'une largeur d'absorption (σ) du spectre d'absorption calculé.

10. Dispositif de mesure (300) destiné à mesurer une distribution de température au moyen d'une pluralité de bolomètres (A₁ à A₆, B₁ à B₆, C₁ à C₆) disposés en réseau sur un substrat commun (101) selon la revendication 9 ; dans lequel les bolomètres microélectromécaniques comportent, dans chaque rangée du réseau, un émetteur à micro-ondes commun (301 à 303) intégré dans le substrat (101) ; et
dans lequel les bolomètres comportent, dans chaque colonne du réseau, un récepteur à micro-ondes commun (311 à 316) intégré dans le substrat (101).
